# EUROPEAN PATENT SPECIFICATION

(11) **EP 3 656 744 B1**
(45) Date of publication and mention of the grant of the patent: **17.06.2026**
(21) Application number: 18207950.9
(22) Date of filing: 23.11.2018
(51) Int. Cl.: C03B 17/04, C03B 20/00

(54) **ON-LINE ANNEALING OF LARGE FUSED QUARTZ INGOTS**
ONLINE-GLÜHEN VON GROSSEN QUARZGLASBLÖCKEN
RECUIT EN LIGNE DE GRANDS LINGOTS DE VERRE DE SILICE

(43) Date of publication of application: 27.05.2020
(73) Proprietor: Krystal Technology UK Limited, Tyne and Wear NE28 6DD (GB)
(72) Inventor: Mundy, Alan, Ponteland Newcastle-upon-Tyne, NE20 9JB (GB); Sayce, Ian George, Stocksfield, Northumberland NE43 7NXS (GB); Gromann, Boris, 63743 Aschaffenburg (DE)
(74) Representative: Barker Brettell LLP

(56) References cited:
- WO-A1-00/03955
- WO-A1-2007/107709
- US-A- 2 398 952
- US-A- 3 212 871
- HERAEUS: "Available dimensions Chemical purity - typical trace elements and OH content in quartz glass (ppm by weight oxide)", 1 October 2018 (2018-10-01), XP055588167, Retrieved from the Internet <URL:https://www.heraeus.com/media/media/hqs/doc_hqs/products_and_solutions_8/solids/TSC_Series_EN.pdf> [retrieved on 20190513]

## Description

In a first aspect the present invention relates to a continuous method for the production of quartz-glass ingots. In a second aspect the present invention relates to an apparatus for the production of quartz-glass ingots which is used in the claimed method.

Methods and apparatus for the continuous production of quartz-glass ingots are known from prior art. These processes are not suitable for the continuous production of large quartz-glass ingots which are cut into smaller section after being extruded. In detail:
US 3,764,286 discloses a process of fusion of quartz in an electrically-heated refractory metal crucible to produce rods and tubes, which are drawn from a die in the base of the furnace. The resulting ingot extruded from the die is cooled by surrounding air and later cut on-line to useful lengths. The cutting step is not critical since the extruded ingots have relatively small sizes and relatively small cross-sectional areas.

CN 102875007 discloses a continuous quartz fusion furnace for producing a solid ingot. Rods with diameters of up to 180 mm are prepared by extruding the fused quartz out of an electrically-heated refractory metal crucible and later cut. Once again, the extruded rods do not define any problem in the cutting process due to the small diameter of the ingots.

Electric fusion has also been used in a batch process to make large diameter fused quartz ingots, see for example US 2009/0100871 A, which describes fusion within a refractory- lined crucible of a bed of quartz powder to give a glass ingot of a diameter of 1700 mm and a height of 620 mm. The process described suffers several limitations. It has proved difficult to ensure complete elimination of all gas associated with the quartz grain, i.e. trapped within, or between the quartz particles, and the absence of flow of the glass during fusion means that there is no opportunity for mixing of any local impurities. Thus, the quality of the quartz glass produced by this method is limited by the presence of bubbles and inclusions which are unacceptable for the most critical applications. Furthermore, the productivity of this multistage batch process is limited as it involves loading, preheating, fusion and subsequent cooling, and attempts to reduce cycle times risk producing a lower quality product.

US 7,305,852 discloses a process for flame-fusion of quartz glass in a rotating crucible or refractory tank. Even though the described process intends to produce quartz-glass ingots having a large diameter, the process corresponds to a classical batch process which does not require an on-line cutting of the resulting ingot.

CN 101148311 discloses a continuous flame fusion of quartz in an oxy-hydrogen flame with ingot withdrawal and on-line cutting. The applied fusion rate is relatively low (1.2 to 1.8 kg/h), and the maximum size of the resulting ingots is 300 mm diameter with a single burner. Even though the resulting ingot is subsequently cut on-line there is no indication that the cutting step provides any problems, in particular due to cracks formed in the cut section ingot.

Flame fusion processes avoid some of the above disadvantages described above. Thus, a typical flame fusion process is a variation of the Verneuil process, in which the quartz powder is passed through an oxy-hydrogen flame and impacted on the molten end surface of an ingot rotating about a horizontal or vertical axis, and which is drawn slowly away from the hot zone solidifying as it recedes from the high temperature region (e.g. US 4,368,846).

Finally, KR 2018/004353 discloses a process in which an oxy-hydrogen fusion of quartz powder to form a large diameter melt is carried out within a crucible. In this process the crucible is static and to achieve a greater length of ingot, the base of the crucible is lowered during the run, so that the extruded glass cools and solidifies beneath the crucible, and the ingot so formed is contained within an insulated chamber. While the extruded ingot may thus be annealed within the chamber at the end of the campaign (by progressively cooling the glass both within the crucible, and suspended below), the process is still a batch process, and technically complex.

WO2007/107709 discloses methods of making large quartz glass ingots by direct deposition process, hot isostatic pressing and slow cooling. WO00/03955 discloses methods of making shaped bodies of silica glass by removing molten material from the shaping orifice of a container.

In summary, there is no disclosure in any of these publications of a continuous manufacture of large diameter ingots, e.g. of diameter greater than 350 mm, and crack-free cutting of such ingots on-line.

Starting from this prior art situation, it is the object of the present invention to provide a method for the production of quartz-glass ingots which can be prepared without the above-mentioned disadvantages.

In particular, it is the object of the present invention to provide a method for the production of quartz-glass ingots which can be prepared and cut continuously.

More particularly, it is the object of the present invention to provide a method for the production of quartz-glass ingots which can be prepared and cut continuously, and which have a large outside diameter.

More particularly, it is the object of the present invention to provide a method for the production of quartz-glass ingots which can be prepared and cut continuously without cracking and which have a large outside diameter.

Moreover, the present invention is faced with the object of providing an apparatus which can be used to produce and cut quartz-glass ingots continuously without cracking, whereby the quartz-glass ingots have a large diameter. This apparatus should be suitable for carrying out the claimed method.

These objects are solved by the underlying idea to carry out an on-line self-annealing by using the internal heat of the ingot prepared by extruding.

Accordingly, the present invention relates - in a first aspect - to a method for the continuous production of quartz-glass ingots, of cross-sectional area greater than 96000 mm², comprising the following process steps:
a. providing a softened quartz-glass material in a crucible or refractory tank;
b. vertically drawing off the softened quartz-glass mass through a die to provide a quartz-glass ingot; and
c. on-line cutting of the quartz-glass ingot to a specific length,
wherein, prior to step c, the quartz-glass ingot is passed through at least one insulated chamber in which on-line annealing of the ingot is caused to take place, characterized in that the quartz-glass ingot is cooled to a surface temperature between 900 and 1150 °C prior entering the at least one insulated chamber.

According to the present invention it has been found out that it is possible to efficiently reduce the residual stress of the quartz-glass ingots by subjecting the extruded and precooled quartz-glass ingot to an on-line annealing which is provided by the internal heat of the ingot. The residual stress in the ingot is reduced by the on-line annealing step so that it becomes possible to cut the quartz-glass ingot in a continuous process without or at least with reduced cracks occurring in the cut ingot sections.

With the present invention, residual stresses in the ingot prepared can be reduced to minimize the risk of crack initiation in the ingot and in particular cracks which, once started, can extend continuously along the descending ingot. Thereby, the claimed method does not require the ingot to cool very slowly and avoids the cutting of the ingot at a greater distance below the furnace, which is not available without increasing the height of the building in which the process is carried out.

The present invention is suitable for the production of quartz-glass ingots having any external diameter. However, quartz-glass ingots having an external diameter of more than 350 mm are prone of cracking during the cutting process and, therefore, the present invention is in particular suitable for the production of quartz-glass ingots having an external diameter of more than 350 mm, particularly of more than 400 mm, more particularly of more than 450 mm. most particularly of more than 500 mm.

### First aspect of the present invention

### - Continuous method for the production of quartz-glass ingots -

In the following, the present method is described in more detail:

### Step a.: Providing a softened quartz-glass material in a crucible or refractory tank

In the process step a. the softened quartz-glass mass as the starting material is provided in a crucible or refractory tank.

Thereby, the refractory tank or the crucible is provided usually in a furnace which permits heating and containment of the quartz-glass mass. The starting material is usually fed into the refractory tank or the crucible as a silicon source, selected from the group of silica, quartz powder and at least one silicon-containing precursor.

In case of a silica or quartz powder, the starting source is either a crystalline quartz or an amorphous silica powder. The powder may be of natural or synthetic origin.

In case of a silicon-containing precursor, the starting material is usually a halogen-free silicon-precursor, in particular a siloxane compound, such as octamethylcyclotetrasiloxane. This silicon-containing precursor is converted in the flame to a stream of silica microparticles and deposited on the surface of the melt. Such a process is described, for example in US 6.763,682.

In one embodiment of the present invention it is possible to use a quartz powder which is supplemented by a flow of the silicon-containing precursor.

It is possible that the silicon source is doped by addition of at least one additional element, in particular by addition of the least one oxide compound. An addition of one or more additional elements is necessary in case an ingot of a doped quartz glass should be prepared.

The silicon source is fed into the refractory tank or the crucible usually from above and may be fed into the refractory tank or the crucible through a burner. Accordingly, the burner is preferably located in the roof of the furnace. The method according to the present invention may also comprise alternative modes for the introduction of the starting material into the refractory tank or the crucible.

The burner is usually charged with at least one combustible gas and oxygen, whereby the combustible gas can be selected from the group consisting of hydrogen, natural gas or a hydrocarbon gas, in particular propane, and a mixture thereof.

By feeding the silicon source into the crucible or refractory tank through the burner, the silicon source is heated by the burner in flight and arrives on the melt surface where it fuses to glass. Moreover, the burner projects a flame or flames downward onto the surface of the melt of the silicon source which helps to melt the starting material.

The powder may be doped by addition of a solid or liquid gas-forming agent if it is required to form an opaque quartz glass, but generally the powder is undoped and of high purity as required to provide a bubble-free fused quartz-glass ingot.

The temperature of the melt surface and/or the furnace wall may be measured using an optical pyrometer and the interior of the furnace may be viewed, for example, through an exhaust port.

### Step b.: Vertically drawing off the softened quartz-glass mass through a die to provide a quartz-glass ingot

In the next step b., the fused silica is extruded substantially vertically from the furnace through an orifice in the form of a die which is usually located in the base of the furnace and, thus, opposite the burner resulting in a quartz-glass ingot.

The fused silica of the crucible or refractory tank being extruded from the furnace through the die orifice solidifies on the external surface after cooling resulting in a quartz-glass ingot.

The external size and the form of the ingot are defined by the external shape of the die orifice being located in the base of the furnace.

Usually, the external diameter of the quartz-glass ingot extruded in process step b. is greater than 350 mm, more preferably greater than 400 mm, further preferably greater than 450 mm. most preferably greater than 500 mm.

After the fused silica is extruded though the die resulting in the quartz-glass ingot, the ingot is cooled by radiation and/or convection of surrounding air. Moreover, the ingot may be cooled by radiation and/or convection of an inert and/or reducing gas.

Besides this normal cooling, it is also possible to enhance the cooling step for the quartz-glass ingot being emerged from the die of the crucible or refractory tank.

Air drawn upwards around the ingot emerging from the die may be used to assist the cooling of the quartz-glass ingot. One further possibility to cool the ingot is to direct a high velocity flow of a cooling gas or to direct a mist of water droplets onto the ingot.

With this enhanced active pre-cooling it becomes possible to reduce the surface temperature of the quartz-glass ingot over a short distance to temperatures between 900 and 1150 °C, more preferably 925 to 1075 °C, most preferably 950 to 1050 °C. These temperatures represent a preferred lower limit for the surface temperature to be achieved before the ingot enters the annealing chamber. Achieving such temperature in a pre-annealing stage permits reduction of the overall distance between die and cutting station but is not essential for the claimed invention.

As already mentioned above, the present invention requires that the quartz-glass ingot being emerged from the crucible or refractory tank is cooled after being extruded in step b. to a temperature of the external surface of the ingot in the region of the strain point of the softened quartz-glass material and the quartz-glass ingot is then subjected to an insulation.

As explained further below, the ingot is usually vertically drawn off the crucible or refractory crucible which requires that the on-line annealing of the ingot emerging from the die is required to be realized vertically, too.

Accordingly, it is important within the present invention to provide a vertical facility for on-line annealing of the descending ingot. However, this is not a simple matter, particularly as, in a factory situation, it is not possible simply to increase the distance between the fusion furnace and the cutting position, and then to off-load a large ingot of fused quartz. Thus, it is necessary to allow the ingot to cool, and the temperature, hence the stress distribution across the ingot to equilibrate, and to achieve these ends within a limited vertical height.

To realize the on-line annealing of the ingot, the ingot preferably passes through one or more annealing chambers which provide controlled cooling of the ingot such that axial and radial temperature gradients within the glass are progressively reduced, while the ingot bulk temperature is reduced under well-controlled conditions.

The on-line annealing of the ingot is preferably carried out within one or more annealing chambers which are constituted by lightweight insulation. In these annealing chambers the ingot is allowed to cool progressively, under conditions under which the radial temperature gradient within the glass is substantially reduced.

In the annealing chamber(s) provided by said lightweight insulations, the cooling process includes convective heat loss to ambient air, rising up through the chamber(s).

The choice of chamber design, the air flow and the nature of the insulation may be selected by the person skilled in the art and facilitated by appropriate computer simulation.

By passing through the annealing chamber(s) the ingot preferably emerges with a surface temperature of less than 600 °C, more preferably of less than 550 °C, most preferably less than 500 °C.

After this on-line annealing, and further progressive cooling as the ingot descends, at the level of the cutting station, the temperature at the center of the ingot is still somewhat higher than that at the surface, but the tensile stress in surface of the ingot is reduced to preferably less than 5 MPa, more preferably less than 4 MPa, most preferably less than 2 MPa.

As already addressed above, the ingot emerging from the die may be allowed to cool until the external temperature is in the region of the strain point before the on-line annealing in the annealing chamber(s) is carried out.

The strain point of the used quartz-glass material is the temperature at which the viscosity of the glass is 10^{14.5} Poise and can be determined easily by the person skilled in the art by a viscosity measurement.

The strain point of a frequently used quartz-glass material (with a viscosity 10^{14.5} Poise is approximately 1080 °C). For such a material, the temperature of the external surface of the ingot at the point of time entering the annealing chamber(s) might be between 900 and 1150 °C (Tₛ), or even somewhat higher. At this point the temperature in the center of the descending ingot (T_{c}) will be considerably higher.

In case the ingot passes through the annealing chamber(s) being constituted, for example, by a lightweight insulation to prevent further heat loss from the surface, the inner temperature of the ingot and the external surface temperatures equilibrate.

The length of the annealing chamber(s) is preferably such that the difference between T_{c} and Tₛ is small, however it is also desirable that by the time the ingot reaches the cutting station, the surface temperature is further reduced, to a value at which cutting with a water-cooled saw is possible

In case the difference between T_{c} and T_{S} is adjusted as mentioned above, both residual and elastic stresses are sufficiently reduced, and the ingot can be cut without or with a low and acceptable risk of occurring cracks.

### Step c.: On-line cutting of the quartz-glass ingot to a specific length

The cutting station is adjacent to the die for drawing off the quartz-glass ingot out of the crucible or refractory tank and is spaced away from the die along the quartz-glass ingot by a distance dependent on the height of the building, but may be typically in the range 2.75 to 3.5 metres

The temperature on the external surface of the ingot in the cutting zone can be measured by any suitable means such optical pyrometers and/or thermocouples. However the temperature at the centre of the ingot can only be estimated by computer simulation.

The quartz-glass ingot being extruded through the die in step b. extends downward from the die orifice traverses a pre-cooling area and the annealing chamber(s) as outlined above. Thereby, the quartz-glass ingot is cooled to a temperature profile mentioned above.

During the traverse downward, the quartz-glass ingot is supported by specific transport means. In a preferred embodiment, these transport means for supporting the quartz-glass ingot are two or more clamps mounted on carriages, whereby the clamps mounted on the carriage move downward from the die orifice at a speed appropriate to follow the fused silica extruded from the die orifice. In the present invention, at least two clamps are needed in order to permit shuttling of the clamps. At least two clamps are needed in contact with the ingot at all times to maintain straightness and usually one or more clamps are needed to permit an ingot support during ingot cutting.

The clamps mounted on the carriage and the quartz-glass ingot move downward preferably with a pre-defined speed such that the softened quartz-glass mass in the furnace (i.e. the crucible or refractory tank) is maintained at a basically constant level.

The cutting and removal of the ingot section being cut (cut ingot section) should preferably be undertaken on-line in order to allow a continuous process.

For this reason, the quartz-glass ingot is drawn downwards until a first pre-defined position of the ingot is reached. At this first pre-defined position, the emerged quartz-glass ingot reaches a bottom carriage where it becomes necessary to cut off a section of the ingot. The part of the quartz-glass ingot which will be cut off is preferably still supported by one of more clamps.

The cutting station is preferably configured by a saw, more preferably by a water-cooled saw, in particular a heavy-duty water-cooled chain or wire saw. The cutting medium of the saw is preferably a metal-bonded diamond (diamond-tipped saw).

At the cutting station, the quartz-glass ingot is cut circumferentially by means of the saw. Moreover, it is preferred that the quartz-glass ingot is cooled by an external water spray before cutting at the cutting station.

After the quartz-glass ingot is cut off, the cut section of the ingot is lowered sufficiently. And it becomes possible to off-load and remove the cut ingot section for optional further processing steps.

Before the cut ingot section is removed, the clamps attached to the cut ingot section are preferably released.

After the cut ingot section of the quartz-glass ingot is removed from the second pre-defined level (floor level), the clamp and bottom carriage of the former cut ingot section of the quartz-glass ingot are preferably raised to the main body of the quartz-glass ingot and re-attached to the main body of the quartz-glass ingot, permitting continued support of the descending ingot until it becomes necessary to make the next cut.

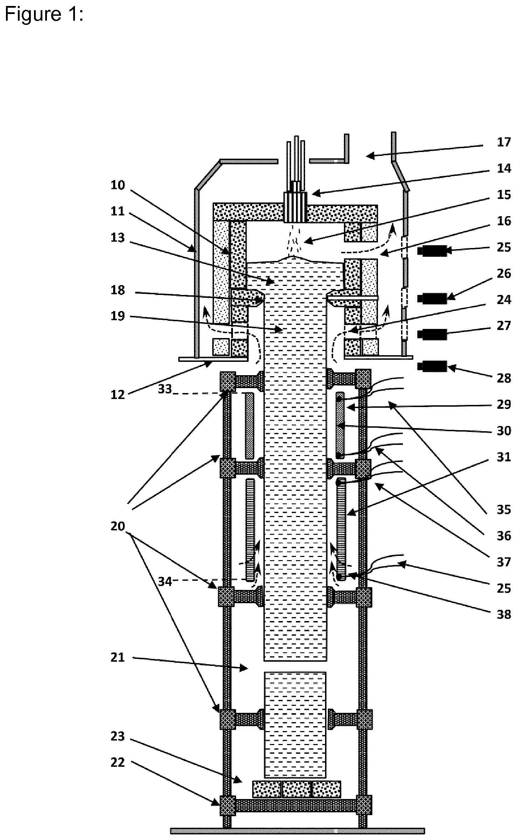

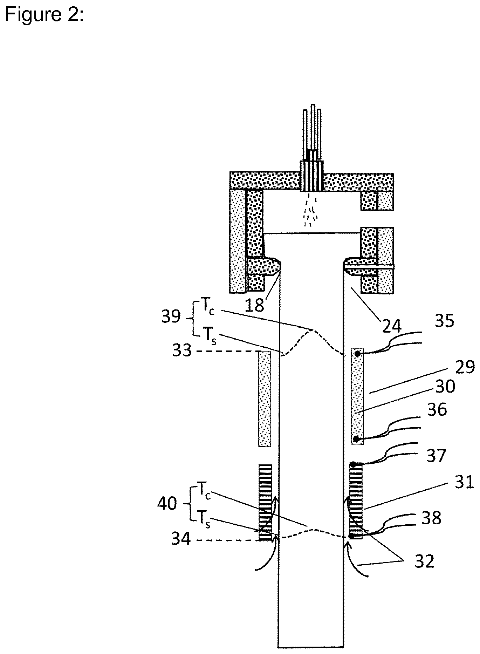

In the following, one preferred embodiment of the claimed invention is described by reference to Figures 1 and 2:
In these figures, the following reference signs are used:
- 10: Refractory tank
- 11: Furnace chamber
- 12: Furnace chamber floor
- 13: Melt
- 14: Burner
- 15: Powder feed
- 16: Exhaust port
- 17: Exhaust flue
- 18: Die orifice
- 19: Ingot
- 20: Clamps
- 21: Cutting Station
- 22: Support plate
- 23: Refractory bricks
- 24: Chimney (optional cooling air)
- 25: Pyrometer 1
- 26: Pyrometer 2
- 27: Pyrometer 3
- 28: Pyrometer 4
- 29: Annealing chamber 1
- 30: Thermal insulation
- 31: Annealing chamber 2 (perforated)
- 32: Cooling air (through and within walls of Chamber 2)
- 33: Start of the annealing zone
- 34: End of the annealing zone
- 35: Thermocouple 1
- 36: Thermocouple 2
- 37: Thermocouple 3
- 38: Thermocouple 4
- 39: Temperature profile on entering Annealing Chamber 1
- 40: Temperature profile on leaving Annealing Chamber 2

One embodiment of a furnace for practicing the present process is shown schematically in Figure 1.

The furnace comprises a refractory tank or crucible 10, enclosed within a furnace chamber 11. The refractory tank may be made for example from bricks of zircon, or yttria-stabilised zirconia, and this contains the fused silica melt 13. This innermost layer of refractory bricks may be surrounded by one or more layers of insulating materials comprising bricks, ceramic fiber, zirconia bubble or other suitable materials to provide further insulation and reduce heat losses through the walls of the furnace. The usual constitution of the furnace is known to the person skilled in the art.

Combustible gas (e.g. hydrogen, natural gas, propane or other hydrocarbon gas, or a mixture), and oxygen are provided to one or more burners 14, set in the roof of the furnace which provides a flame or flames projecting downward onto the surface of the melt. Quartz powder 15 (i.e. crystalline or amorphous powder of silica, which may be of natural or synthetic origin) may be added via the one or more burners or introduced by alternative means. Optionally, if it is required to make an ingot of doped quartz glass, the powder may be doped by addition of one or more additional elements, present for example in the form of oxide. The powder may be heated in flight and arrives on the surface of the melt 13 where it fuses to glass. The powder may be doped by addition of a solid or liquid gas-forming agent if it is required to form an opaque quartz glass, but generally the powder is un-doped and of high purity as required to provide a bubble-free fused quartz ingot.

The combustion products leave the furnace through exit port 16, and thereafter leave the furnace chamber via exhaust flue 17.

In another embodiment, the powder feed may be supplemented or replaced by a flow of a suitable silicon-containing precursor, preferably a halogen-free precursor, for example a siloxane, such as octamethylcyclotetrasiloxane (OMCT, D4), which may be converted in the flame to a stream of silica microparticles and deposited on the surface of the melt 14 (as described, for example, in US 6,763,682).

The temperature of the melt surface 13, and/or of the furnace wall may be measured using one or more optical pyrometers 25, 26, 27, and 28. The interior of the furnace may be viewed through the exhaust port 16.

The furnace may be round, polygonal, or square in cross-section, but preferably conforms to the shape of the required ingot product. Set in the base of the furnace is an orifice 18 which acts as a die and defines the external dimensions of the ingot 19 which is extruded therefrom. The die may be comprised of refractory ceramic material, e.g. yttria-stabilised zirconia or zircon, or may be made from a refractory metal (e.g. tungsten or molybdenum) in which case oxidation-resistance may be promoted by suitably coating the metal surface (e.g. with a coating of the metal silicide etc.), or by provision of an inert or reducing gas environment.

The glass emerges with high viscosity and, on rapid cooling, the external surface solidifies almost immediately. The ingot extends downward and is supported by a series of clamps 20 mounted on carriages which can move downward at a speed appropriate for the flow of the glass, i.e. equivalent to the powder feed rate, so that the melt within the furnace is maintained at constant depth. As each carriage reaches the lower limit of its traverse, its hold on the ingot is released, and it is moved to its upper limit, when the grip on the ingot is renewed. The ingot is always gripped by two or more sets of clamps, and thus the straightness of the ingot is ensured. At the lower end of the ingot the ingot cutting station 21 is positioned, at which the ingot may be cut to useful lengths, and then removed for further processing.

Suitable cutting means include heavy-duty water-cooled chain or wire saws, and the cutting medium may be a metal-bonded diamond.

Immediately below the die the ingot cools by radiation and convection to the surrounding air (or inert/reducing gas if appropriate). Air drawn upwards around the ingot into the furnace chamber 11 may be used to assist cooling (cooling air 24), and this may be further promoted by injecting a high velocity flow of cooling gas, provision of a mist of water droplets etc., if required.

Glass surface temperature in the die region and ingot temperatures beneath the die may be measured by one or more suitable optical pyrometers 25, 26, 27 and 28.Local temperatures may also be measured using thermocouples or alternative methods, if required.

Cooling of the external surface of the ingot may be achieved by convection and radiation to the environment, but prior to cutting it may be useful to cool the ingot additionally by an external water spray, directed from a ring of spray jets, located around the ingot, to ensure that the temperature of the external surface of the ingot is reduced to less than ca. 300 °C, before cutting with a water-cooled saw.

The process according to the invention is generally commenced with the furnace cavity filled with fragments of fused quartz, and the die orifice blocked by a cylindrical bait-piece of fused quartz, held in place by clamps 20. After initial melting of the furnace contents, quartz powder is introduced via the one or more burners 14, and the ingot 19 is drawn downwards, while maintaining the melt level within the furnace approximately constant.

After the quartz-glass ingot leaves the crucible or refractory tank 10, the ingot is preferably subjected to a cooling step which is shown in Figure 2 by reference number 24 (chimney or pre-cooling area).

The ingot traverses the upper and lower annealing chambers 29, 31. At the start point 33of the annealing chamber 30 the ingot has the temperature profile 39 between the external surface of the ingot (T_{S}) and the center of the ingot (T_{C}) and after the end point 34 of the annealing zone 31 the ingot has the temperature profile 37 between the external surface of the ingot (T_{S}) and the center of the ingot (T_{C}). The temperature profile 36 has a sharp increase due to the greater difference between T_{C} and T_{S}, whereas the difference between T_{C} and T_{S} is much lower in the temperature profile 37 because the temperatures T_{C} and T_{S} get closer to each other.

### Second aspect of the present invention

### - Apparatus for the continuous method for the production of large fused quartz ingots

In a second aspect, the present invention relates to an apparatus for the continuous production of quartz-glass ingots of cross-sectional area greater than 96000 mm². This apparatus is able to carry out the above-mentioned process and comprises the following means:
(a) a crucible or refractory tank for providing a softened quartz-glass mass having a die orifice in the bottom of the crucible or refractory tank;
(b) means for vertically drawing off the softened quartz-glass mass through a die to provide a quartz-glass ingot;
(c) means for on-line cutting of the quartz-glass ingot to a specific length;

characterized in that the apparatus comprises means for an on-line annealing of the quartz-glass ingot prior to the means (c) for on-line cutting of the quartz-glass ingot, wherein the means for the on-line annealing are constituted by panels of one or more insulating materials which encircle the ingot with predetermined clearance,
wherein the apparatus further comprises means for directing a high velocity flow of a cooling gas or for directing a mist of water droplets onto the ingot emerging from the die before entering the means for on-line annealing, or
wherein the panels are constituted such that they act as a chimney permitting a controlled upward flow of cooling air around the ingot,
so that the quartz-glass ingot is pre-cooled to a surface temperature between 900 and 1150 °C prior to on-line annealing.

Within the panels the temperature may be monitored by thermocouples, pyrometer or other suitable means.

The specific design of the panels and of the resulting annealing chamber may be approached empirically or supported by computer simulation.

The apparatus according to the present invention may comprise further components and parts which are mentioned below. The functionality of these additional parts becomes clear by the above-mentioned method description and is summarized shortly as follows:
The claimed apparatus comprises the crucible or refractory tank which is provided preferably with a burner in the roof of the crucible or refractory tank and with a die orifice in the bottom of the crucible or refractory tank.

The starting material for the production of the quartz-glass ingot is provided to the crucible or refractory tank usually through the burner which is equipped with supply means for oxygen and a combustible gas, for example hydrogen, natural gas, hydrocarbon gas, such as propane, and any suitable mixture thereof.

The crucible or refractory tank is usually arranged in a furnace chamber in which they are enclosed.

The refractory tank or crucible may be made for example from bricks of zircon, or yttria-stabilised zirconia, and is suitable to contain the fused silica melt. This innermost layer of refractory bricks may be surrounded by one or more layers of insulating materials, comprising bricks, ceramic fiber, zirconia bubble or other suitable materials to provide further insulation and reduce heat losses through the walls of the furnace.

The starting material of the process, e.g. the quartz powder, may be added via the one or more burners, or introduced by alternative means.

The furnace may be round, polygonal, or square in cross-section, but preferably conforms to the shape of the required ingot product. Set in the base of the furnace is an orifice which acts as a die and defines the external dimensions of the ingot which is extruded therefrom. The die may be comprised of refractory ceramic material, e.g. yttria-stabilised zirconia or zircon, or may be made from a refractory metal (e.g. tungsten or molybdenum) in which case oxidation-resistance may be promoted by suitably coating the metal surface (e.g. with a coating of the metal silicide etc.), or by provision of an inert or reducing gas environment.

Furthermore, the claimed apparatus comprises moveable carriage(s) and clamps which support the extruded ingot moving downward. The clamps are usually mounted on the carriages. The clamps are configured to hold the extruded ingot and are able to grip and release the ingot. The claimed apparatus preferably comprises at least two clamps to grip the emerged ingot.

The claimed apparatus also comprises an ingot cutting station, at which the ingot may be cut to useful lengths. Suitable cutting means for the claimed apparatus include heavy-duty water-cooled chain or wire saws, and the cutting medium may be a metal-bonded diamond.

The claimed apparatus may also comprise means for cooling the external surface of the quartz-glass ingot, such as a water spray which may be arranged above the cutting station (21) of the claimed apparatus.

Moreover, the claimed apparatus comprises means for cooling the ingot directly after being emerged from the die orifice. This means allow cooling of the ingot by radiation and convection of surrounding air, a flow of inert gas, a flow of reducing gas and a mist of water droplets.

The apparatus may also comprise optical pyrometers, thermocouples or alternative means for the surveillance of the temperature of the emerged ingots at different positions.

Further parts of the claimed apparatus become evident from the detailed description of the claimed process disclosed above.

### Third aspect of the present application (not according to the invention)

### - Large quartz-glass ingot -

Finally, the present application relates to the quartz-glass ingots which are prepared according to the above-mentioned process or by using the above-mentioned apparatus, whereby the quartz-glass ingot is cut into sections of a pre-defined length.

The quartz-glass ingots are characterized in that the outside diameter of the ingot is more than 350 mm, more preferably more than 450 mm, at most preferably more than 500 mm.

The quartz-glass ingots are further characterized in that the tensile stress in the ingot is preferably less than 5 MPa, more preferably less than 4 MPa, and most preferably less than 2 MPa.

The quartz-glass ingots are further characterized in that the cross-sectional area of the ingot is preferably greater than 96,000 mm², more preferably greater than 150,000 mm², at most preferably greater than 180,000 mm².

The resulting ingots are preferably composed of vitreous silica, particularly i of high purity transparent fused quartz such that they are suitable for use in semiconductor and optical applications.

The present invention is described in more detail by reference to the following example:
The distance from the die 18 to the furnace chamber floor 12 was 300 mm, and in this trial chimney ventilation ports 24 were not open.

Beneath the floor was a space of height 250 mm permitting reciprocal movement of the uppermost clamp 20, and below this was the upper insulation chamber 30 which extended downward a distance of 500 mm. This section comprised an octagonal assembly of plates of Vecoboard RCF1400, refractory ceramic fibre board, 12 mm thick (Eco Technical Ceramics, Bolton). These sheets were supported approximately 50 mm distance from the descending ingot, permitting an upward flow of air in the channel between the insulation and the ingot.

Beneath Insulation section 30 was an open region (height 250 mm, permitting movement of one of the clamps 20, followed by a second insulation chamber 31, 500 mm long, comprised of another octagonal assembly made from 1.5 mm thick plates of perforated stainless steel incorporating holes 10 mm diameter on a 13 mm pitch ( F. H. Brundle). Again, these plates were mounted approximately 50 mm from the ingot, permitting an inward and upward flow of air in the channel so formed, and providing progressive and controlled cooling, and preventing a sudden temperature change as the ingot emerged from the upper annealing chamber.

Thermocouples 32 to 35 were mounted at the upper and lower ends of each of these insulation chambers monitoring the temperature of the inner surface of the insulation.

The cutting station 21 was situated approximately 1.8 meters below the lower end of insulation chamber 31.

During the manufacture of a fused quartz ingot of diameter 530 mm in continuous operation, the ingot was caused to move downward at a rate of 20 mm/h. Under these conditions, thermocouples 32, 33, 34, and 35 on the inner surface of the insulation indicated temperatures of > 1100 °C, 900 °C, 750 °C, and 430 °C respectively. The thermocouple 32 experienced radiative heating from the die a, d chimney region above. The ingot surface temperature on entry into the upper annealing chamber was approximately 1100 °C and on leaving the lower annealing chamber approximately 520 °C. A computer simulation indicated a significant reduction in radial temperature difference Tc - Ts caused by the two annealing chambers, and corresponding reduction in stress in the ingot.

Under these circumstances the surface temperature at the cutting station was approximately 200 °C. Using a saw, tipped with metal bonded diamond, and cooled by water fed at a temperature of 60 °C, it was possible repeatedly to cut the descending ingot at the cutting station into sections 1000 mm long with no significant cracks being induced in the surface of the ingot. Earlier attempts to cut such a large ingot on-line in the absence of the controlled annealing provided by the annealing chambers described above, led to the formation of longitudinal cracks in the ingot of the ingot, and such cracks were found to grow continuously as the ingot descended, rendering the product unacceptable for the purpose intended.

## Claims

1. A method for the continuous production of quartz-glass ingots, of cross-sectional area greater than 96000 mm², comprising the following process steps:
a. providing a softened quartz-glass material in a crucible or refractory tank;
b. vertically drawing off the softened quartz-glass mass through a die to provide a quartz-glass ingot; and
c. on-line cutting of the quartz-glass ingot to a specific length.
wherein, prior to step c, the quartz-glass ingot is passed through at least one insulated chamber in which on-line annealing of the ingot is caused to take place, **characterized in that** the quartz-glass ingot is cooled to a surface temperature between 900 and 1150 °C prior entering the at least one insulated chamber.

2. The method according to claim 1, **characterized in that** the ingot has an external surface temperature T_{S} and a center temperature T_{C}, whereby the difference between T_{C} and T_{S} of the ingot is progressively reduced during the insulation by the internal heat of the descending quartz-glass ingot.

3. The method according to any one of claims 1 or 2, **characterized in that** the quartz-glass ingot is cooled to a surface temperature of less than 250°C prior to cutting.

4. The method according to any one of claims 1 to 3, **characterized in that** the residence time during insulation is 20 hrs to 150 hrs.

5. The method according to any one of claims 2 to 4, **characterized in that** the difference between the external surface temperature T_{S} and a center temperature T_{C} after insulation is less than 40 °C.

6. The method according to anyone of claims 1 to 5, **characterized in that** the surface tensile stress of the quartz-glass ingot prior to the cutting in step c. is less than 5 MPa.

7. The method according to any one of claims 1 to 6, **characterized in that** the cutting zone is spaced less than 4.00 m from the die orifice along the quartz-glass ingot emerged from the die orifice.

8. An apparatus for the continuous production of quartz-glass ingots of cross-sectional area greater than 96000 mm², comprising the following means:
(a) a crucible or refractory tank for providing a softened quartz-glass mass having a die orifice in the bottom of the crucible or refractory tank;
(b) means for vertically drawing off the softened quartz-glass mass through a die to provide a quartz-glass ingot; and
(c) means for on-line cutting of the hollow quartz-glass ingot to a specific length;
**characterized in that** the apparatus comprises means for an on-line annealing of the quartz-glass ingot prior to the means (c) for on-line cutting of the quartz-glass ingot, wherein the means for the on-line annealing are constituted by panels of one or more insulating materials which encircle the ingot with predetermined clearance,
wherein the apparatus further comprises means for directing a high velocity flow of a cooling gas or for directing a mist of water droplets onto the ingot emerging from the die before entering the means for on-line annealing, or
wherein the panels are constituted such that they act as a chimney permitting a controlled upward flow of cooling air around the ingot,
so that the quartz-glass ingot is pre-cooled to a surface temperature between 900 and 1150 °C prior to on-line annealing.

9. The apparatus according to claim 8, **characterized in that** the cutting is carried out with a saw.

## Patentansprüche

1. Verfahren zur fortlaufenden Herstellung von Quarzglasrohlingen mit einer Querschnittsfläche von mehr als 96000 mm², umfassend die folgenden Prozessschritte:
a. Bereitstellen eines weichen Quarzglasmaterials in einem Tiegel oder einem feuerfesten Tank;
b. vertikales Herausziehen der weichen Quarzglasmasse durch eine Matrize, um einen Quarzglasrohling bereitzustellen; und
c. kontinuierliches Schneiden des Quarzglasrohlings auf eine spezifische Länge.
wobei der Quarzglasrohling vor Schritt c durch mindestens eine isolierte Kammer geleitet wird, in der ein Stattfinden von kontinuierlichem Glühen des Rohlings verursacht wird, **dadurch gekennzeichnet, dass** der Quarzglasrohling auf eine Oberflächentemperatur zwischen 900 und 1150 °C abgekühlt wird, bevor er in die mindestens eine isolierte Kammer eintritt.

2. Verfahren nach Anspruch 1, **dadurch gekennzeichnet, dass** der Rohling eine Außenoberflächentemperatur Tₛ und eine Mittentemperatur T_{c} aufweist, wobei die Differenz zwischen T_{c} und Tₛ des Rohlings während der Isolierung durch die Innenwärme des absinkenden Quarzglasrohlings schrittweise reduziert wird.

3. Verfahren nach einem der Ansprüche 1 oder 2, **dadurch gekennzeichnet, dass** der Quarzglasrohling vor dem Schneiden auf eine Oberflächentemperatur von weniger als 250 °C abgekühlt wird.

4. Verfahren nach einem der Ansprüche 1 bis 3, **dadurch gekennzeichnet, dass** die Verweilzeit während der Isolierung 20 h bis 150 h beträgt.

5. Verfahren nach einem der Ansprüche 2 bis 4, **dadurch gekennzeichnet, dass** die Differenz zwischen der Außenoberflächentemperatur Tₛ und einer Mittentemperatur T_{c} nach der Isolierung weniger als 40 °C beträgt.

6. Verfahren nach einem der Ansprüche 1 bis 5, **dadurch gekennzeichnet, dass** die Oberflächenzugspannung des Quarzglasrohlings vor dem Schneiden in Schritt c. weniger als 5 MPa beträgt.

7. Verfahren nach einem der Ansprüche 1 bis 6, **dadurch gekennzeichnet, dass** die Schneidzone weniger als 4,00 m von der Matrizenöffnung entlang des aus der Matrizenöffnung ausgetretenen Quarzglasrohlings beabstandet ist.

8. Vorrichtung zur fortlaufenden Herstellung von Quarzglasrohlingen mit einer Querschnittsfläche von mehr als 96000 mm², umfassend die folgenden Mittel:
(a) einen Tiegel oder einen feuerfesten Tank zum Bereitstellen einer weichen Quarzglasmasse mit einer Matrizenöffnung im Boden des Tiegels oder des feuerfesten Tanks;
(b) ein Mittel zum vertikalen Herausziehen der weichen Quarzglasmasse durch eine Matrize, um einen Quarzglasrohling bereitzustellen; und
(c) ein Mittel zum kontinuierlichen Schneiden des hohlen Quarzglasrohlings auf eine spezifische Länge;
**dadurch gekennzeichnet, dass** die Vorrichtung ein Mittel für ein kontinuierliches Glühen des Quarzglasrohlings vor dem Mittel (c) zum kontinuierlichen Schneiden des Quarzglasrohlings umfasst, wobei das Mittel für das kontinuierliche Glühen aus Platten aus einem oder mehreren Isoliermaterialen ausgebildet ist, die den Rohling mit vorbestimmtem Spiel umgeben,
wobei die Vorrichtung ferner ein Mittel zum Leiten einer Hochgeschwindigkeitsströmung eines Kühlgases oder zum Leiten eines Nebels aus Wassertröpfchen auf den aus der Matrize austretenden Rohling umfasst, bevor dieser in das Mittel zum kontinuierlichen Glühen eintritt, oder
wobei die Platten derart ausgebildet sind, dass sie als Schornstein fungieren, der eine gesteuerte Kühlluftströmung nach oben um den Rohling herum ermöglicht,
sodass der Quarzglasrohling vor dem kontinuierlichen Glühen auf eine Oberflächentemperatur zwischen 900 und 1150 °C vorgekühlt wird.

9. Vorrichtung nach Anspruch 8, **dadurch gekennzeichnet, dass** das Schneiden mit einer Säge durchgeführt wird.

## Revendications

1. Procédé pour la production continue de lingots de verre de quartz, de surface de section transversale supérieure à 96 000 mm², comprenant les étapes de procédé consistant à :
a. fournir un matériau en verre de quartz ramolli dans un creuset ou une cuve réfractaire ;
b. prélever verticalement la masse de verre de quartz ramollie à travers une filière pour fournir un lingot de verre de quartz ; et
c. réaliser la découpe en ligne du lingot de verre de quartz à une longueur spécifique ;
dans lequel, avant l'étape c, le lingot de verre de quartz est passé à travers au moins une chambre isolée dans laquelle un recuit en ligne du lingot est réalisé, **caractérisé en ce que** le lingot de verre de quartz est refroidi à une température de surface entre 900 et 1150 °C avant l'entrée dans l'au moins une chambre isolée.

2. Procédé selon la revendication 1, **caractérisé en ce que** le lingot présente une température de surface externe Tₛ et une température centrale T_{c}, de sorte que la différence entre T_{c} et Tₛ du lingot est progressivement réduite pendant l'isolation par la chaleur interne du lingot de verre de quartz descendant.

3. Procédé selon l'une quelconque des revendications 1 ou 2, **caractérisé en ce que** le lingot de verre de quartz est refroidi à une température de surface inférieure à 250 °C avant la découpe.

4. Procédé selon l'une quelconque des revendications 1 à 3, **caractérisé en ce que** le temps de séjour pendant l'isolation est de 20 h à 150 h.

5. Procédé selon l'une quelconque des revendications 2 à 4, **caractérisé en ce que** la différence entre la température de surface externe Tₛ et une température centrale T_{c} après isolation est inférieure à 40 °C.

6. Procédé selon l'une quelconque des revendications 1 à 5, **caractérisé en ce que** la contrainte de traction superficielle du lingot de verre de quartz avant la découpe à l'étape c. est inférieure à 5 MPa.

7. Procédé selon l'une quelconque des revendications 1 à 6, **caractérisé en ce que** la zone de découpe est espacée de moins de 4,00 m de l'orifice de filière le long du lingot de verre de quartz émergeant de l'orifice de filière.

8. Appareil pour la production continue de lingots de verre de quartz de surface de section transversale supérieure à 96 000 mm², comprenant les moyens suivants :
(a) un creuset ou une cuve réfractaire pour fournir une masse de verre de quartz ramollie ayant un orifice de filière dans le fond du creuset ou de la cuve réfractaire ;
(b) des moyens pour réaliser l'étirage vertical de la masse de verre de quartz ramollie à travers une filière pour fournir un lingot de verre de quartz ; et
(c) des moyens pour réaliser la découpe en ligne du lingot de verre de quartz à une longueur spécifique ; **caractérisé en ce que** l'appareil comprend des moyens pour réaliser un recuit en ligne du lingot de verre de quartz avant les moyens (c) pour réaliser la découpe en ligne du lingot de verre de quartz, dans lequel les moyens pour réaliser le recuit en ligne sont constitués par des panneaux d'un ou plusieurs matériaux isolants qui encerclent le lingot avec un jeu prédéterminé,
dans lequel l'appareil comprend en outre des moyens pour diriger un flux à haute vitesse d'un gaz de refroidissement ou pour diriger un brouillard de gouttelettes d'eau sur le lingot émergeant de la filière avant l'entrée dans les moyens pour réaliser le recuit en ligne, ou
dans lequel les panneaux sont constitués de telle sorte qu'ils agissent comme une cheminée permettant un flux ascendant contrôlé d'air de refroidissement autour du lingot,
de sorte que le lingot de verre de quartz est pré-refroidi à une température de surface entre 900 et 1150 °C avant le recuit en ligne.

9. Appareil selon la revendication 8, **caractérisé en ce que** la découpe est réalisée avec une scie.
